# EUROPEAN PATENT APPLICATION

(11) **EP 2 853 422 A2**
(43) Date of publication of application: **01.04.2015**
(21) Application number: 14181918.5
(22) Date of filing: 22.08.2014
(51) Int. Cl.: B60G 13/00, F15B 15/00

(54) **Piston cyliner and forklift having the same**

(30) Priority: 25.09.2013 CN 201320591582 U; 25.09.2013 CN 201320591915 U
(71) Applicant: BYD Company Limited, Shenzhen, Guangdong 518118 (CN)
(72) Inventor: He, Xiyang, 518118 Shenzhen (CN); Chen, Kuiyu, 518118 Shenzhen (CN)
(74) Representative: Gulde & Partner

(57) **Abstract**

A piston cylinder and a forklift having the same are provided. The piston cylinder includes: a cylinder body (1); a piston rod assembly (2) movable with respect to the cylinder body (1) and including: a piston rod (20); a first piston (21) disposed within and slidable with respect to the cylinder body (1), fitted over the piston rod (20) movably, and having a buffer groove (4) formed in an end surface thereof; and a second piston (22) located within the cylinder body (1) and fixed to the piston rod (20), and adapted to enter into the buffer groove (4) to be fitted therein and come out therefrom, and having a damping structure (221) to buffer the second piston (22) during entering of the second piston (22) into the buffer groove (4).

## Description

The invention relates to a piston cylinder and a forklift having the same.

### BACKGROUND

Hydraulic cylinders are widely used in lifting mechanisms of forklifts due to a working stability thereof. There are following problems existent: when a piston rod is lifted to a top, the piston rod collides with a cylinder body, thus causing a rigid mechanical impact which not only generates an impact noise pollution, but also reduces a working life of related components. Synchronously, the impact generated by the collision can also affect the stability of goods lifted by a fork of a forklift truck, or even cause a falling of the goods from the fork, thus resulting in a potential danger for the people on the ground.

### SUMMARY

The present invention seeks to solve at least one of the problems existing in the related art to at least some extent.

A first object of the present invention is to provide a piston cylinder. The piston cylinder comprises a cylinder body defining a first end and a second end; a piston rod assembly movable with respect to the cylinder body and comprising: a piston rod defining a first end extended out of the first end of the cylinder body and a second end located within the cylinder body; a first piston disposed within and slidable with respect to the cylinder body, fitted over and movable with respect to the piston rod, and having a buffer groove formed in an end surface thereof; and a second piston located within the cylinder body and fixed to the piston rod, the second piston being adapted to enter into the buffer groove to be fitted therein and come out from the buffer groove, the second piston having a damping structure to buffer the second piston during entering of the second piston into the buffer groove.

Preferably the piston rod comprises a first piston rod segment and a second piston rod segment.

Preferably a diameter of the first piston rod segment is larger than that of the second piston rod segment.

Preferably the second piston is fixed on the second piston rod segment, and the first piston is movably fitted over the second piston rod segment and located between the first piston rod segment and the second piston.

Preferably, the buffer groove has a circular cross section, and a ratio of a diameter of the buffer groove to a diameter of the first piston is 1/4 to 3/4.

Preferably, a ratio of a depth of the buffer groove to a length of the first piston is 1/4 to 3/4.

Preferably, the damping structure is configured as a through-hole formed in the second piston and penetrated though the second piston in an axial direction of the second piston.

Preferably, the damping structure is configured as a groove formed in a peripheral surface of the second piston and penetrated in the axial direction of the second piston.

Preferably, a diameter of the damping structure is 0.1 to 0.5mm.

Preferably, the piston cylinder comprises a stop member disposed in the cylinder body and configured to stop a movement of the first piston.

Preferably, the stop member is disposed at the first end of the cylinder body.

Preferably, the cylinder body defines a chamber comprising an oil chamber and an oilless chamber, the oil chamber is defined between the first piston and the second end of the cylinder body, and the oilless chamber is defined between the first piston and the first end of the cylinder body.

Preferably, the cylinder body defines a chamber comprising an oil chamber and an oilless chamber, the oil chamber is defined between the first piston and the second end of the cylinder body, and the oilless chamber is defined between the first piston and the stop member.

Preferably, a hydraulic path through which oil flows into and out of the oil chamber is formed at the second end of the cylinder body.

Preferably, a first circumferential sealing groove is formed on an outer peripheral surface of the first piston contacted with an inner surface of the cylinder body, and a first seal is disposed in the first circumferential sealing groove.

Preferably a second circumferential sealing groove is formed on an inner peripheral surface of the first piston contacted with an outer surface of the piston rod, and a second seal is disposed in the second circumferential sealing groove.

Preferably a second circumferential sealing groove is formed on an inner peripheral surface of the first piston contacted with an outer surface of the second piston rod segment, and a second seal is disposed in the second circumferential sealing groove.

A second object of the present invention is to provide a forklift. The forklift comprises a piston cylinder according to the invention.

With the piston cylinder according to the present invention, when the first piston contacts with the second piston, a flowing speed of the oil from the buffer groove of the first piston to the oil chamber can be greatly reduced, such that a moving speed of the piston rod is slowed down until the piston rod is stop gradually. Thus, a rigid collision between the piston rod assembly and the cylinder body is avoided, and an impact noise pollution is reduced and a working life of related components is improved as well.

Further aspects of the invention could be learned from the description and the claims.

### BRIEF DESCRIPTION OF THE DRAWINGS

These and other aspects and advantages of embodiments of the present invention will become apparent and more readily appreciated from the following descriptions made with reference to the accompanying drawings, in which:
Fig. 1 is a schematic view of a piston cylinder according to a preferred embodiment of the present invention;
Fig. 2 is a schematic view of a piston cylinder in an initial stage according to a preferred embodiment of the present invention;
Fig. 3 is a schematic view of a piston cylinder in a first movement stage according to a preferred embodiment of the present invention;
Fig. 4 is a schematic view of a piston cylinder in a second movement stage according to a preferred embodiment of the present invention;
Fig. 5 is a schematic view of a piston cylinder in a buffering stage according to a preferred embodiment of the present invention; and
Fig. 6 is a schematic view of a piston cylinder in a stage after completion of the buffering according to a preferred embodiment of the present invention.

### DETAILED DESCRIPTION

Reference will be made in detail to embodiments of the present disclosure. The same or similar elements and the elements having same or similar functions are denoted by like reference numerals throughout the descriptions.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom" ,"inner", "outer", "clockwise", "anticlockwise" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance.

In the description of the present disclosure, unless specified or limited otherwise, it should be noted that, terms "mounted," "connected" "coupled" and "fastened" may be understood broadly, such as permanent connection or detachable connection, electronic connection or mechanical connection, direct connection or indirect connection via intermediary, inner communication or interreaction between two elements. These having ordinary skills in the art should understand the specific meanings in the present disclosure according to specific situations.

The present invention will be further described with reference to the drawings and embodiments.

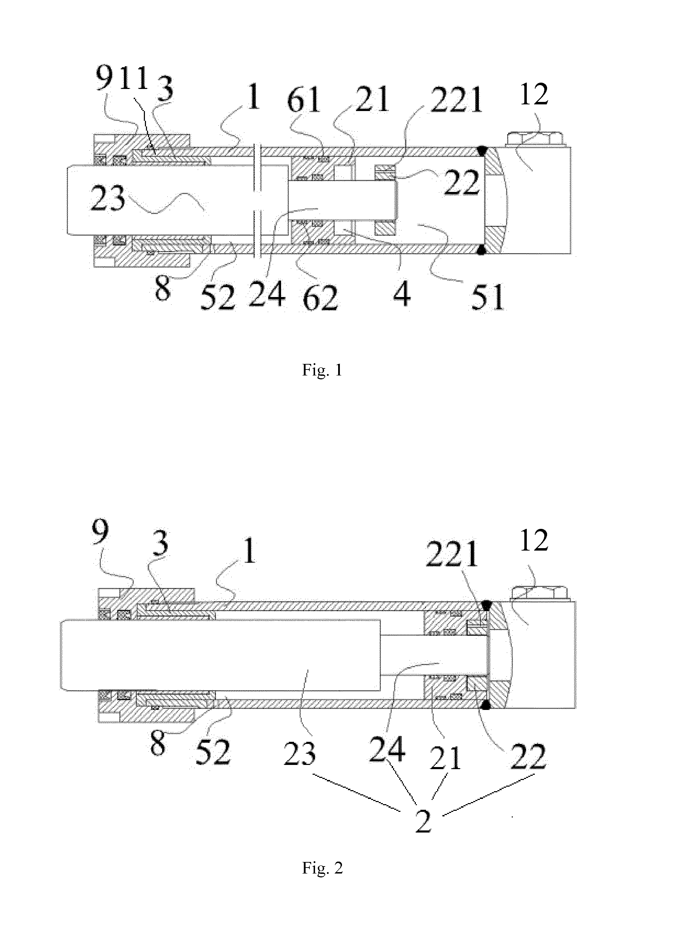

As shown in Figs. 1-6, a piston cylinder according to embodiments of the present invention is provided. The piston cylinder includes a cylinder body 1, a piston rod assembly 2 and a stop member 3. The cylinder body 1 has a first end 11 and a second end 12. The piston rod assembly 2 is movable with respect to the cylinder body 1 and includes a piston rod 20, a first piston 21 and a second piston 22. The first piston 21 is disposed within and slidable with respect to the cylinder body 1, and is fitted over and movable with respect to the piston rod 20, and an end surface of the first piston 21 is formed with a buffer groove 4. The second piston 22 is located within the cylinder body 1 and is fixed to the piston rod 20. Moreover, the second piston 22 is adapted to enter into the buffer groove 4 to be fitted therein and come out from the buffer groove 4. The second piston 22 also has a damping structure 221 to buffer the second piston 22 during entering of the second piston 22 into the buffer groove 4.

Further, a stop member 3 is disposed in the cylinder body 1 and is configured to stop a movement of the first piston 21.

The piston rod 20 has a first end extended out of the first end 11 of the cylinder body 1 and a second end located within the cylinder body 1. Specifically, the piston rod 20 includes a first piston rod segment 23 and a second piston rod segment 24, and the second piston 22 is fixed on the second piston rod segment 24 and moves along with the second piston rod segment 24. The first piston 21 is fitted over the second piston rod segment 24 and is located between the first piston rod segment 23 and the second piston 22, and the first piston 21 can slip freely with respect to the second piston rod segment 24 and the cylinder body 1.

In an embodiment of the present invention, a diameter of the first piston rod segment 23 may be larger than that of the second piston rod segment 24, such that the first piston 21 is prevented from colliding with the cylinder body 1 heavily under an action of hydraulic oil, thus, it avoids generating an impact noise pollution and causing a damage to the cylinder body 1 and the first piston 23 due to the conclusion, and increases a working life of the cylinder 1 and the first piston 23.

The end surface of the first piston 21, facing to the second piston 22, is formed with the buffer groove 4 which is corresponding to the second piston 22, and the buffer groove 4 may have a circular cross section or a square cross section. In an embodiment of the present invention, the buffer groove 4 has the circular cross section, correspondingly, the second piston 22 also has a circular cross section, in which a diameter of the second piston 22 is a slightly less than that of the buffer groove 4, which means that the second piston 22may be received in the buffer groove 4 totally and there may be no gap formed between an outer peripheral surface of the second piston 22 and an inner peripheral surface of the buffer groove 4. In other words, the outer peripheral surface of the second piston 22 may be hermetically cooperated with the walls of the buffer groove 4.

In an embodiment of the present invention, a ratio of a depth of the buffer groove 4 to a length of the first piston 21 is 1/4 to 3/4, such that a sufficient buffering distance is ensured for the piston cylinder and a best buffer effect can be implemented. With the piston rod assembly 2 contacting with the cylinder body 1 flexibly, the rigid collision between the piston rod assembly 2 and the cylinder body 1 can be avoided, thus reducing the impact noise pollution, avoiding the damage on the piston rod assembly 2 and the cylinder body 1 due to the collision and improving the working life.

In an embodiment of the present invention, the buffer groove 4 has the circular cross section, and a ratio of the diameter of the buffer groove 4 to a diameter of the first piston 21 is 1/4 to 3/4. Thus sufficient hydraulic oil can be stored in the buffer groove 4 to obtain a better buffering effect for the piston rod assembly 2 and to implement a flexible contact between the piston rod assembly 2 and the cylinder body 1, instead of the rigid collision. Moreover, it also reduces the impact noise pollution, avoids the damage on the piston rod assembly 2 and the cylinder body 1 due to the collision and increases the working life.

Furthermore, the second piston 22 has the damping structure 221. The damping structure 221 may be a through-hole formed in the second piston 22 and penetrated though the second piston 22 in an axial direction of the second piston 22, or a groove formed in a peripheral surface of the second piston 22 and penetrated in the axial direction of the second piston 22 (not shown). With the damping structure 221, when the second piston 22 moves in the buffer groove 4, the hydraulic oil in the buffer groove 4 can only be discharged from the damping structure 221.

In an embodiment of the present invention, the damping structure 221 is the through-hole, and the outer peripheral surface of the second piston 22 is hermetically cooperated with the walls of the buffer groove 4. Thus, when the second piston 22 moves toward to the first piston 21 and is being received in the buffer groove 4 gradually, the hydraulic oil in the buffer 4 can only be discharged from the through-hole, such that the moving speed of the second piston 22 to be received in the buffer groove 4 can be reduced and the buffering function is formed between the piston rod assembly 2 and the cylinder body 1.

In order to obtain a better buffering effect, a diameter of the damping structure may be from 0.1mm to 0.5 mm.

The piston cylinder according to embodiments of the present invention also defines a chamber 5 therein. The chamber 5 includes an oil chamber 51 and an oilless chamber 52. The oil chamber 51 is formed between the first piston 21 and the second end 12 of the cylinder body 1, and the oilless chamber 52 is formed between the first piston 21 and the stop member 3.

A hydraulic path through which the hydraulic oil flows into and out of the oil chamber 51 is formed at the second end 12 of the cylinder body 1 (not shown). Moreover, an air hole 8 is formed in the cylinder body 1 through which air gets into and out of the oilless chamber 52, i.e., the air hole 8 is located correspondingly to the oilless chamber 52.

The hydraulic oil may leak into the oilless chamber 52 from the oil chamber 51 along the slipping movement of the piston rod assembly 2 within the cylinder body 1. In order to avoid a poor buffering effect of the piston cylinder caused by the leaking of the hydraulic oil, a first circumferential sealing groove is formed on an outer peripheral surface of the first piston 21 contacted with an inner surface of the cylinder body 1, and a first seal 61 is disposed in the first circumferential sealing groove. On the other hand, a second circumferential sealing groove is formed on an inner peripheral surface of the first piston 21 contacted with an outer surface of the second piston rod segment 24, and a second seal 62 is disposed in the second circumferential sealing groove. When the piston rod assembly 2 moves in the cylinder body 1, the hydraulic oil can just be accumulated in the oil chamber 51 without leaking into the oilless chamber 52, thus improving the buffering effect of the piston cylinder.

Moreover, the stop member 3 is disposed at the first end 11 of the cylinder body 1 to stop a movement of the first piston 21 toward the first end 11 of the cylinder body 1. As long as the stop member 3 can stop the movement of the first piston 21, the material of the stop member 3 is not limited, and a connection manner between the stop member 3 and the cylinder body 1 is also not limited, i.e., the stop member 3 and the cylinder 1 may be formed integrally, or the stop member 3 may be connected with the cylinder body 1 detachably. The stop member 3 may be configured as an annular structure fitted over the first end 11 or a plurality of steps. The plurality of the steps protrudes toward an interior of the cylinder body 1. The plurality of steps can be coplanar to and uniformly arranged on the inner surface of the first end 11.

In an embodiment of the present invention, the piston cylinder further includes a cylinder cover 9 fitted over the first end 11 of the cylinder body 1. A through-hole for the piston rod 20 to pass through is formed in the cylinder cover 9. By disposing the cylinder cover 9, the interior of the piston cylinder can be maintained clean and dust can be prevented from entering the piston cylinder, thus ensuring a clean working environment for the components within the cylinder body 1.

An operational principle of the piston cylinder according to embodiments of the present disclosure is generally described as follows.

In an initial stage as shown in Fig. 2, the oil chamber 51 is filled with the hydraulic oil via the hydraulic path, and the piston rod assembly 2 is at the second end 12 of the cylinder body 1. Meanwhile, the oilless chamber 52 is full of air.

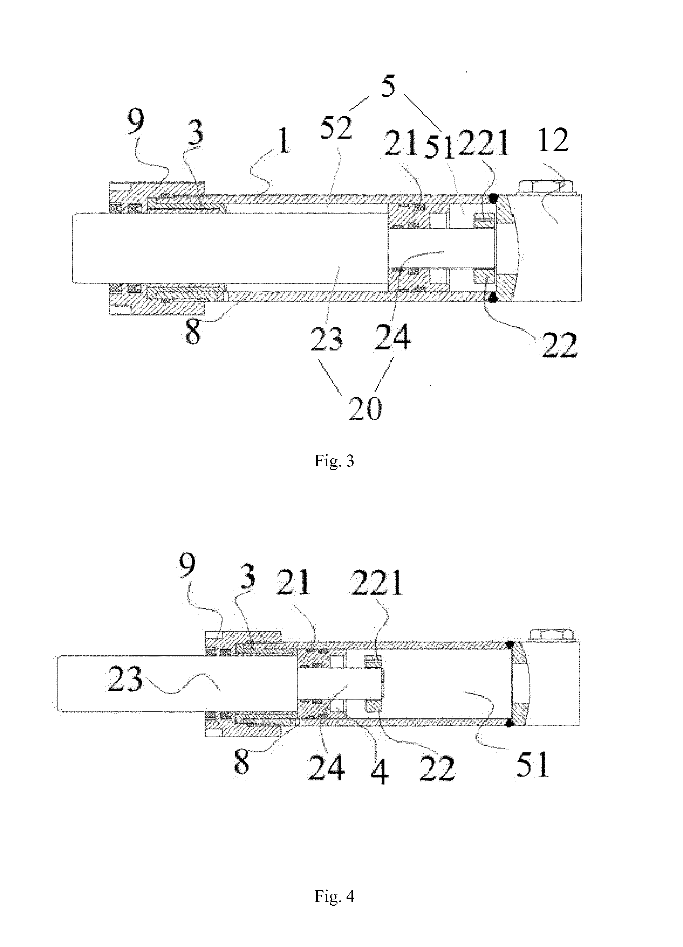

In a first movement stage as shown in Fig. 3, the hydraulic oil flows into the oil chamber 51 via the hydraulic path continuously, and the hydraulic oil pushes the first piston 21 to move toward the first end 11 of the cylinder body 1 until the first piston 21 contacts with the first piston rod segment 23. With an action of the hydraulic oil, the piston rod 20 starts to move toward the first end 11 of the cylinder body 1 along with the first piston 21, and the second piston 22 moves toward the first end 11 of the cylinder 1 along with the piston rod 20. At this time, a volume of the oil chamber 51 is enlarged gradually and a volume of the oilless chamber 52 is reduced gradually, in which the air in the oilless chamber 52 is discharged from the piston cylinder through the air hole 8 gradually.

In a second movement stage as shown in Fig. 4, when the first piston 21 moves to contact with the stop member 3, the movement of the first piston 21 is stopped. And then the piston rod 20 and the second piston 22 moves forward to the first end 11 of the cylinder body 1 mainly without loss of moving speed due to the action of the hydraulic oil, and a distance between the second piston 22 and the first piston 21 is becoming less and less.

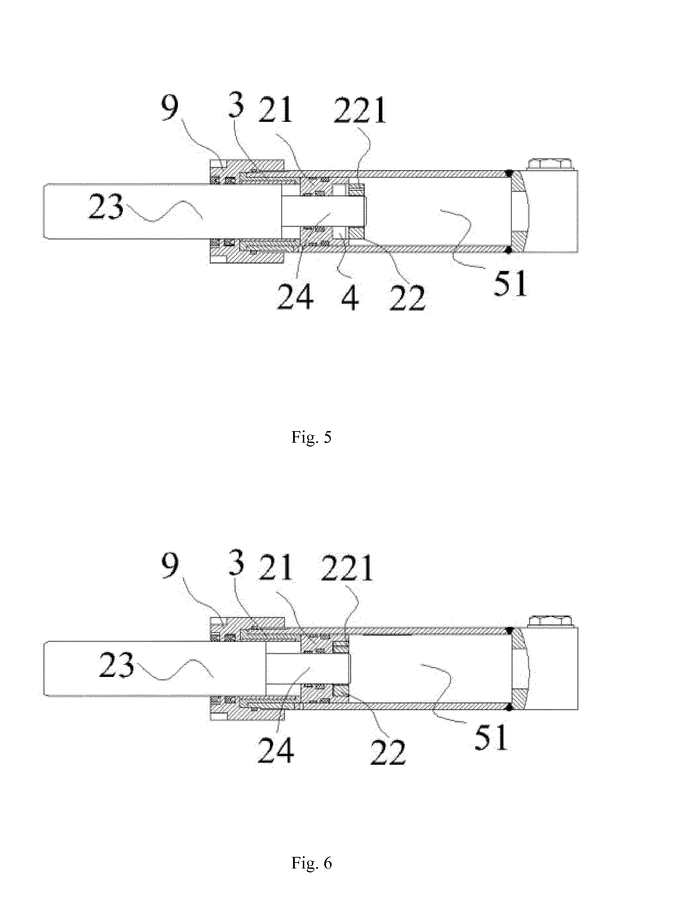

In a buffering stage as shown in Figs. 5 and 6, when the second piston 22 starts to enter the buffer groove 4, because of the seal formed between the outer peripheral surface of the second piston 22 and the walls of the buffer groove 4, the hydraulic oil in the buffer groove 4 can only flow through the damping structure 221 to enter the oil chamber 52, such that a flowing speed of the hydraulic oil from the buffer groove 4 to the oil chamber 51 is greatly decreased, and the moving speed of the second piston 22 toward to the first piston 21 is also greatly decreased. Thus, the second piston 22 and the piston rod 20 are stopped slowly and the piston rod assembly 2 contacts with the cylinder body 1 flexibly until the second piston 22 contacts with a bottom of the buffer groove 4 and the hydraulic oil in the buffer groove 4 is completely discharged.

In a compression process of the oil chamber 51, the piston rod assembly 2 moves toward the second end 12 from the first end 11 of the cylinder body 1 due to an action of gravity, and the oil camber 51 is compressed and the hydraulic oil therein flows out through the hydraulic path. The oilless chamber 52 is enlarged and the air flows into the oilless chamber 52 through the air hole 8 until the piston rod assembly 2 reaches the second end 12 of the cylinder body 1 and stops. Thus, a movement cycle of the piston cylinder is finished.

With the piston cylinder according to embodiments of the present invention, when the first piston 21 is stopped by the stop member 3, the second piston 22 can move further to enter the buffer groove 4. Since the buffer groove 4 is contacted with the second piston 22 in the sealing manner, the hydraulic oil in the buffer chamber 4 can only be discharged out through the damping structure 221, such that the moving speed of the second piston 22 toward the first piston 21 is dramatically decreased and the piston rod 20 contacts with the cylinder body 1 flexibly and stops gradually. With the buffering function, there is no collision generated between the piston rod 20 and the cylinder body 1, such that the impact noise pollution generated by the collision is also reduced, the damage on the piston rod 20 and the cylinder body 1 is also avoided, and the working life of the piston cylinder is increased. Since the rigid collision is eliminated, the stability of goods lifted by the fork of the forklift truck is improved, and the potential danger for the people on the ground caused by fallen goods can be avoided.

Embodiments of the present invention further provide a forklift. The forklift includes a piston cylinder according to embodiments of the present invention. With the piston cylinder according to embodiments of the present invention, when a fork of the forklift is lifted to a top, there is no rigid-mechanical collision generated between the piston rod 20 and the cylinder body 1 due to the buffer function of the piston cylinder, and the piston rod 20 and the cylinder body 1 contacts with each other flexibly, such that the goods on the fork cannot fall off, thus avoiding a risk of the damage for the people on the ground and improving the operation safety of the forklift greatly.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present invention. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present invention. Furthermore, the particular features, structures, materials, or characteristics may be combined in any suitable manner in one or more embodiments or examples.

## Claims

1. A piston cylinder, comprising:
a cylinder body (1) defining a first end (11) and a second end (12);
a piston rod assembly (2) movable with respect to the cylinder body (1) and comprising:
a piston rod (20) defining a first end extended out of the first end (11) of the cylinder body (1) and a second end located within the cylinder body (1);
a first piston (21) disposed within and slidable with respect to the cylinder body (1), fitted over and movable with respect to the piston rod, and having a buffer groove (4) formed in an end surface thereof; and
a second piston (22) located within the cylinder body (1) and fixed to the piston rod (20), the second piston (22) being adapted to enter into the buffer groove (4) to be fitted therein and come out from the buffer groove (4), the second piston (22) having a damping structure (221) to buffer the second piston (22) during entering of the second piston (22) into the buffer groove (4).

2. The piston cylinder of claim 1, wherein the piston rod comprises a first piston rod segment (23) and a second piston rod segment (24), and the second piston (22) is fixed on the second piston rod segment (24), the first piston (21) is movably fitted over the second piston rod segment (24) and located between the first piston rod segment (23) and the second piston (22).

3. The piston cylinder of claim 2, wherein a diameter of the first piston rod segment (23) is larger than that of the second piston rod segment.

4. The piston cylinder of any one of claims 1-3, wherein the buffer groove (4) has a circular cross section, a ratio of a diameter of the buffer groove (4) to a diameter of the first piston (21) is 1/4 to 3/4.

5. The piston cylinder of any one of claims 1-4, wherein a ratio of a depth of the buffer groove (4) to a length of the first piston (21) is 1/4 to 3/4.

6. The piston cylinder of any one of claims 1-5, wherein the damping structure (221) is configured as a through-hole formed in the second piston (22) and penetrated through the second piston (22) in an axial direction of the second piston (22).

7. The piston cylinder of any one of claims 1-5, wherein the damping structure (221) is configured as a groove formed in a peripheral surface of the second piston (22) and penetrated in the axial direction of the second piston (22).

8. The piston cylinder of claim 6 or 7, wherein a diameter of the damping structure (221) is 0.1 to 0.5mm.

9. The piston cylinder of any of claims 1-8, wherein the piston cylinder comprises a stop member (3) disposed in the cylinder body (1) and configured to stop a movement of the first piston (21).

10. The piston cylinder of claim 9, wherein the stop member (3) is disposed at the first end (11) of the cylinder body (1).

11. The piston cylinder of any one of claims 1-10, wherein the cylinder body (1) defines a chamber (5) comprising an oil chamber (51) and an oilless chamber (52), the oil chamber (51) is defined between the first piston (21) and the second end (12) of the cylinder body (1), and the oilless chamber (52) is defined between the first piston (21) and the first end (11) of the cylinder body (1), preferably between the first piston (21) and the stop member (3).

12. The piston cylinder of claim 11, wherein a hydraulic path through which oil flows into and out of the oil chamber (51) is formed at the second end (12) of the cylinder body (1).

13. The piston cylinder of any one of claims 1-12, wherein a first circumferential sealing groove is formed on an outer peripheral surface of the first piston (21) contacted with an inner surface of the cylinder body, and a first seal is disposed in the first circumferential sealing groove.

14. The piston cylinder of any one of claims 1-13, wherein a second circumferential sealing groove is formed on an inner peripheral surface of the first piston (21) contacted with an outer surface of the piston rod (20), preferably of the second piston rod segment (24), and a second seal is disposed in the second circumferential sealing groove.

15. A forklift, comprising a piston cylinder of any one of claims 1-14.
